# EUROPEAN PATENT SPECIFICATION

(11) **EP 0 392 843 B1**
(45) Date of publication and mention of the grant of the patent: **24.02.1993**
(21) Application number: 90303953.5
(22) Date of filing: 11.04.1990
(51) Int. Cl.: B65G 47/26, B07C 5/02

(54) **Product stabilizer**
Produkt-Stabilisator
Stabilisateur de produits

(30) Priority: 11.04.1989 US 337278; 01.12.1989 US 449499
(43) Date of publication of application: 17.10.1990
(73) Proprietor: SIMCO/RAMIC CORPORATION, Medford, Oregon 97504 (US)
(72) Inventor: Wilbur John H., Medford, Oregon 97504 (US); Schey Michael D., White City, Oregon 97503 (US)
(74) Representative: Lawrence, Malcolm Graham

(56) References cited:
- FR-A- 2 197 797
- GB-A- 1 035 630
- GB-A- 2 067 924

## Description

The present invention is directed to a product stabilizer and more specifically, to stabilizing fruits and vegetable product moving on a high speed conveyor.

### Background of the Invention

In the processing of fruits and vegetables and other similar products, they are generally moved on a high speed conveyor examined by a camera and then cut or ejected to sort out bad or defective product. Naturally, when passing under the camera they should be relatively stable.

Existing techniques for stabilizing such products include a cylinder formed from surgical tubing attached to hubs having wrapped around it a mesh. The hubs include friction rim members for rolling contact with the moving belt. The mesh material rolling against the product on the belt stabilizes it. The foregoing is shown in U.S. Patent No. 4,830,180. The difficulty with the mesh is that such material tends to pick up some types of product, such as green beans, and there is difficulty in maintaining cleanliness. Another type of wheel is in a paddle wheel format and is constructed of foam rubber. With foam rubber the force rises in an objectionable manner when it is pushed.

### Object and Summary of the Invention

It is therefore a general object of the present invention to provide an improved product stabilizer.

In accordance with the above object, there is provided a product stabilizer for stabilizing products e.g. fruit and vegetable products, being examined on a moving conveyor belt comprising a pair of rotatable hubs positioned astride and in driving engagement by contact with the conveyor belt and an inflatable bladder constructed of a pliable material and connected between the hubs, the bladder being adapted to receive a pressurized medium and inflatable to a generally cylindrical shape that permits the bladder resiliently to conform to products passing between it and the conveyor belt.

In the product stabilizer of the invention an inflatable bladder is sealed to the hubs for forming an airtight cylinder. A source of pressurized medium e.g. a gas such as air, pressurizes the bladder to a predetermined pressure. The bladder is constructed of a pliable material and inflated to a pressure easily to conform to the fruits and vegetables passing beneath it.
Figure 1 is a simplified side view of a conveyor with the stabilizer of the present invention interacting with the product on it;
Figure 2 is an end view of Figure 1;
Figure 3 is a more detailed view of Figure 2 showing the pressure arrangement;
Figure 4 is a simplified cross-sectional view of the bearing arrangement of Figure 3;
Figure 5 is a greatly enlarged view of a portion of Figure 1 showing how the product stabilizer interacts with product on a conveyor belt.
Figure 6 is an alternative embodiment of Figure 2; and
Figure 7 is a cross-sectional view taken along line 7-7 of Figure 6.

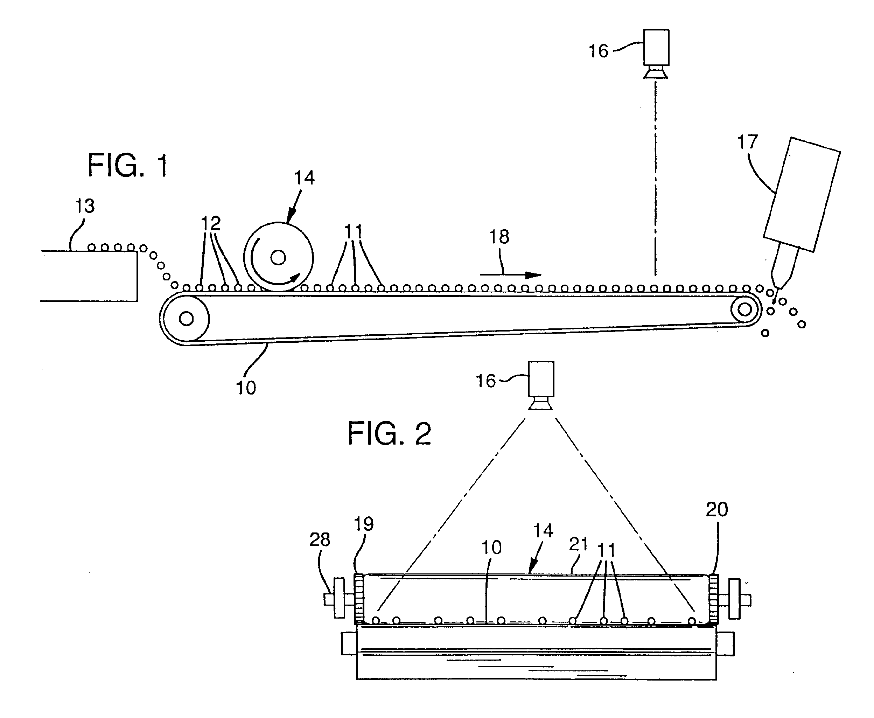

Figure 1 shows a standard conveyor belt 10 carrying product 11 which may be generally circular type fruits and also vegetables, such as green beans and carrots. As shown at 11, the product is in a stable condition but at 12 it is unstable since it has just been fed onto the belt by an in-feed mechanism 13. The cylindrical product stabilizer illustrated at 14 by rolling over and contacting the product suppresses any erratic movement -- thus stabilizing it.

Thereafter the stabilized product 11 is reviewed by a camera 16 and an ejector 17 takes appropriate action to eject defective product or whatever is the case. The product flow line direction is indicated at 18.

The more detailed end view of Fig. 2 shows the roller 14 fully and how it is formed between the hubs 19 and 20, both of which are in contact with the surface of conveyor 10, the hubs being astride the belt and in continuing rotatable contact therewith. Thus, this provides the same linear speed of the movement of the hub circumference as the belt.

In addition, stretched between the hubs 19 and 20 is an inflatable airtight bladder 21 which forms an airtight cylinder and is constructed of pliable material to conform to various types of products that are placed on the belt.

The optimum material is believed to be Buna-N (sometimes called "Nitrol") which is a 8.0 x 10⁻⁴ m (1/32˝) thick white rubber type material approved by the Food and Drug Administration, which is easily cleaned and offers the flexibility required to conform to a wide variety of product shapes. Typically it has a durometer rating from 5.1-5.8 N (60-70). This is in comparison to foam rubber, which has a 2.4-2.8 N (25-30) rating which, as discussed above, has the objectionable characteristic of increasing force as it is compressed. Hard rubber or plastic has a rating of 7.3 N (90). Other suitable material is also black Neoprene rubber which is of the same thickness. With such a thickness, the following air pressures in kg/m² (inches of water) are suitable: 1) baby white potatoes - 127-203 (5-8); 2) cherries - 152-254 (6-10); 3) peas - 203-305 (8-12); 4) rice - 254-508 (10-20).

With the above pliability and air pressures and with a bladder 21 having a diameter of approximately 0.17 m (7˝) and a length of 1.3 m (50˝), the foregoing parameters of pressure and pliability were sufficient to stabilize the above products. Thus, it is apparent that the range of suitable pressures is from 127-508 kg/m² (5-20˝ of water). (24 inches of water is equal to one psi). A slight increase in thickness and reduction of pliability or flexibility, for example, to 1.0 x 10⁻⁴ m (0.042˝), was found to require greater air pressure of from 1403-3515 kg/m² (2-5 psi). While working satisfactorily for some products, this is believed to be at the edge of usefulness. One reason is that the flexibility or pliability of the material is lost at the greater pressures. In addition, as is discussed below, if the pressure is too great, the roller, since it is freely supported in a vertical direction, will tend to float or lift off.

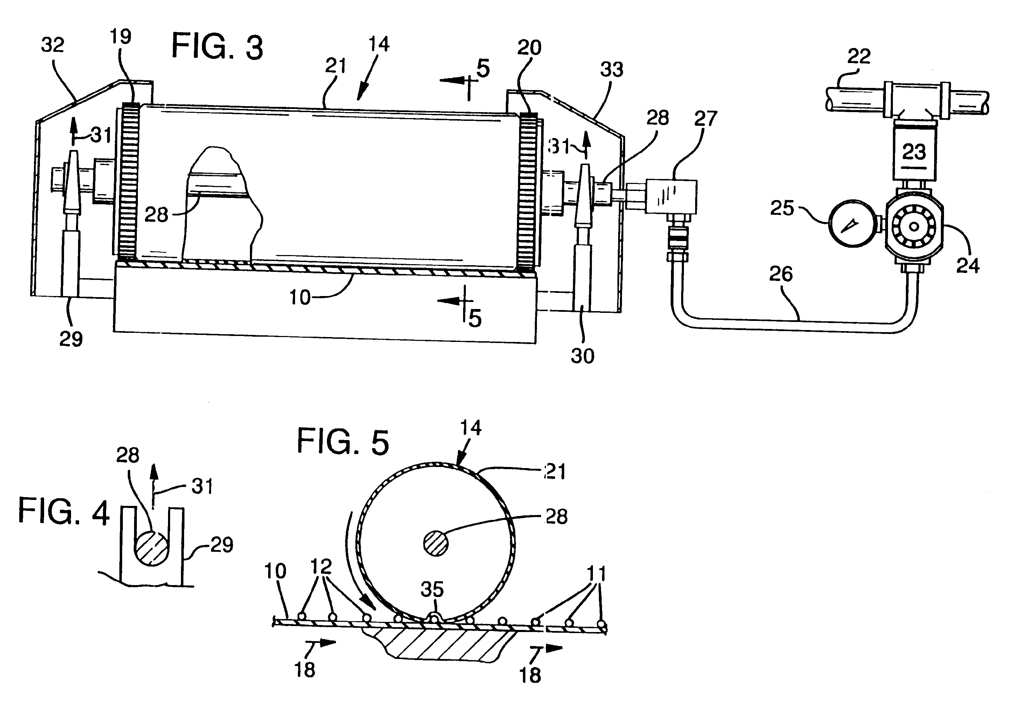

Fig. 3 illustrates the more detailed mounting and mechanical aspects of the invention. A high pressure air supply line is provided at 22 which may carry standard industrial pressure of 120 psi. Coupled to this is a first stage pressure reducer 23 which may reduce the pressure to 1.1 x 10⁴ - 1.4 x 10⁴ kg/m² (15-20 psi) and then a second stage 24, which is variable and includes the gauge 25 which is calibrated for the purposes of the present invention from 0 to 762 kg/m² (30˝ of water). The output of the second stage 24 is coupled via a flexible supply hose 26 to a rotating joint 27 which then extends through the axle 28 of the cylinder to the interior of bladder 21 to maintain its inflation.

Axle 28 is suspended on a pair of bearings 29 and 30 as better illustrated in the case of bearing 29 in Fig. 4 so that it is freely movable in a vertical direction 31. The bearing would typically be of a roller bearing type. Protective covers are provided at 32 and 33.

The mounting of Fig. 4 is designed such that after disconnecting the air supply, the roller 14 and its bladder 21 can be lifted off the conveyor without further disassembly. The ease of removal of this assembly simplifies cleaning requirements and speeds conveyor belt replacement. In addition, as discussed above, during operation the free vertical or upward movement prevents any unwanted preloading of the roller 14 on the conveyor 10. This facilitates its stabilizing function. For example, the free vertical motion allows any oversize product to pass under the stabilizer and therefore not cause a blockage of flow. And of course, as is apparent from Fig. 3, the vertical mobility of roller 14 is partially made possible by the flexible air supply hose 26.

In order to drive the roller 14 directly off the conveyor belt minimizing chances of a discrepancy in phase or speed between the stabilizing bladder 21 and the conveyor belt 10, each hub 19 and 20 includes as an integral part a lagging strip which is shown in the drawing as serrated, which supplies the required traction at the belt's surface. By this method the speed of the bladder surface matches the linear velocity of the conveyor belt.

The operation of the product stabilizer is best illustrated in Fig. 5 where the bladder 21 of roller 14 is shown as deforming at 35 when passing over a product 12 which was formerly unstable. From an operational point of view, due to the high speed of the conveyor belt 10, product that is dropped onto the belt has a tendency to slide, jump or roll. This happens because there is insufficient friction at the belt surface for the product to accelerate to the same velocity at which the conveyor is traveling. When the product travels under the stabilizer roller 14 the pliable surface of the inflated bladder 21 conforms to the product and suppresses any erratic movement.

Lastly, as shown at 11, after the product is passed beneath the roller 14, it will move along the conveyor belt without shifting position or rolling and thus be effectively imaged by the camera 16, as illustrated in Fig. 1.

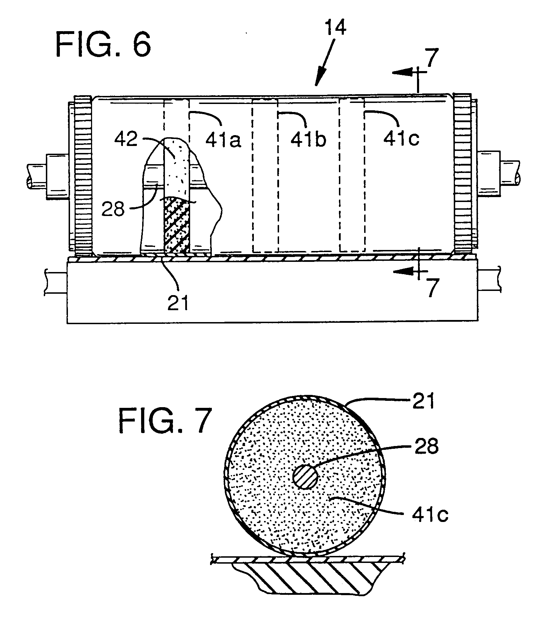

Figs. 6 and 7 show an alternative embodiment of the bladder 21 and the overall roller 14 where three sponge rubber disks 41a, 41b and 41c are affixed for rotation on the axle or shaft 28. The sponge rubber is of a very resilient material made of low density open foam. It is force-fit or glued on the shaft 28, as better illustrated in Fig. 7, and preferably by the use of a much smaller hole in the foam than the diameter of the shaft 28.

In the preferred embodiment, three disks are utilized, each disk having a thickness of approximately 0.025 m (1˝). Thus, for a typical dimension of a hub to hub distance of approximately 1,2 m (48˝) the disks 41 are spaced on 0.3 m (12˝) centers. Thus, the total thickness of the three disks (that is, 7.6 x 10⁻² m (3˝)) is significantly less than the 1.2 m (48˝) hub-to-hub distance which is effectively the length of the bladder 21. This allows the air pressure within bladder 21 and the compliancy of the bladder material itself to still substantially determine its ability to conform to the fruits and vegetables passing beneath it.

In addition, the thickness 0.025 m (1˝) of each disk 41 is much less than its diameter (approximately 0.17 m (7˝)) so that each disk easily bends as well as compresses.

At the same time, each peripheral edge 42 of a disk 41 is substantially contiguous to the bladder 21 so that in effect the bladder contains the disks. This contiguity or physical contact provides for a damping action on the bladder 21 which helps maintain its concentricity during rotation; in other words, whipping is prevented. Such damping might be necessary because of imperfections in the seam of the bladder which would cause an imbalance which at high speeds might cause a "whipping" action. Thus, the disks serve to accommodate these inconsistencies and imperfections and provide damping of the bladder during high speed rotation in order to maintain its contact with the moving product underneath it. In addition, the open cell low density nature of the foam rubber disk does not interfere with the compliancy or the conformance of the bladder 21 to the fruits and vegetables passing beneath it. Rather than the use of resilient material such as foam rubber, other materials such as a sponge material might be suitable.

Thus, an improved product stabilizer has been provided.

## Claims

1. A product stabilizer (14) for stabilizing products (12) transported on a moving conveyor belt (10), comprising:
a pair of rotatable hubs (19, 20) positioned astride and in driving engagement by contact with the conveyor belt (10); and
an inflatable bladder (21) constructed of a pliable material (21) and connected between the hubs, the bladder (21) being adapted to receive a pressurized medium and inflatable to a generally cylindrical shape that permits the bladder (21) to resiliently conform to products (12) passing between it and the conveyor belt (10).

2. The product stabilizer (14) of Claim 1 wherein the bladder (21) is continuously connected to a source (22) of pressurized medium.

3. The product stabilizer (14) as claimed in Claim 1 or Claim 2 wherein the hubs (19, 20) are sealed to the pliable material (21) and function as walls of the generally cylindrical bladder (21).

4. The product stabilizer (14) as claimed in any one of Claims 1 to 3 in which the product stabilizer (14) is adapted for use in a product inspection system and functions to stabilize the products (12) for inspection on the conveyor belt (10).

5. The product stabilizer (14) as claimed in any one of Claims 1 to 4 wherein the products (12, 11) are food products.

6. The product stabilizer (14) as claimed in any one of Claims 1 to 5 wherein the pressurized medium constitutes a gas.

7. The product stabilizer (14) as claimed in any one of Claims 1 to 6 wherein the bladder (21) is formed of a rubber-type material having a durometer value within a range of substantially 5.1-5.8 N (60-70).

8. The product stabilizer (14) of as claimed in any one of Claims 1 to 7 wherein the rotatable hubs (19, 20) have substantially the same circumference as the bladder (21).

9. The product stabilizer (14) as claimed in Claims 1 to 8 further comprising:
an axle (28) to which the hubs (19, 20) are mounted for rotation above the conveyor belt (10); and
support means (29) for supporting the axle (28) and allowing free upward movement (31) of the axle (28) such that oversized products (12) are allowed to pass under the stabilizer (14).

10. A method for stabilizing products (12) transported on a moving conveyor belt (10), comprising:
inflating with a pressurized medium a bladder (21) constructed of a pliable material (21) to create a bladder (21) of substantially cylindrical shape, the inflated bladder (21) being connected between a pair of hubs (19, 20) positioned astride and in driving engagement by contact with the conveyor belt (10);
depositing products (12) onto the conveyor belt (10); and
transporting the products (12) on the conveyor belt to pass them between the bladder (21) and the conveyor belt (10) such that the bladder (21) substantially conforms to the products (12) and stabilizes them on the conveyor belt (10).

11. The method of Claim 10 wherein the hubs (19, 20) have substantially the same circumferences as the bladder (21), are sealed to the pliable material (21) of the bladder (21), and function as walls of the bladder (21) such that it is substantially air tight.

12. The method as claimed in Claim 10 or Claim 11 wherein the bladder (21) is continuously connected to a source of pressurized medium (22).

13. The method as claimed in any one of Claims 10 to 12 wherein the pressurized medium constitutes gas, the products (12) are food products, and the product stabilizer (14) is adapted for use in a product inspection system and functions to stabilize the products (12) for inspection on the conveyor belt (10).

14. A product inspection system having a product stabilizer (14) to stabilize products (12) for inspection, comprising:
an optical inspection device (16);
conveying means (10) for conveying products (12) along a path past the optical inspection device (16);
a pair of rotatable hubs (19, 20) positioned astride and in driving engagement by contact with the conveying means (10); and
an inflatable bladder (21) constructed of a pliable material (21) and connected between the hubs (19, 20), the bladder (21) being adapted to receive a pressurized medium and inflatable to a generally cylindrical shape that permits the bladder (21) to resiliently confirm to products (12) passing between it and the conveying means (10).

15. The product inspection system of Claim 14 wherein the hubs (19, 20) have substantially the same circumferences as the bladder (21), are sealed to the pliable material (21) of the bladder (21), and function as walls of the bladder (21) such that it is substantially air tight.

16. The product inspection system as claimed in Claim 14 or Claim 15 wherein the bladder (21) is continuously connected to a source (22) of pressurized medium.

17. The product inspection system is claimed in any one of Claims 14 to 16 wherein the pressurized medium constitutes gas, the products (12) are food products, and the product stabilizer (14) is adapted for use in a product inspection system and functions to stabilize the products (12) for inspection on the conveying means (10).

## Patentansprüche

1. Produktstabilisator (14) zum Stabilisieren von Produkten (12), die auf einem sich bewegenden Förderband (10) transportiert werden, der folgende Teile enthält:
- ein Paar von rotierenden Naben (19, 20), die rittlings und in treibender Verbindung durch Kontakt mit dem Förderband (10) angeordnet sind; und
- einen aufblasbaren Balg (21), der aus biegsamem Material (21) besteht und zwischen den Naben angeordnet ist, wobei der Balg (21) so angeordnet ist, daß er ein Druckmedium aufnehmen kann und daß er zu einer im wesentlichen zylindrischen Form aufblasbar ist, die dem Balg (21) ermöglicht, sich elastisch an Produkte (12) anzupassen, die zwischen ihm und dem Förderband (10) hindurchlaufen.

2. Produktstabilisator (14) nach Anspruch 1, wobei der Balg (21) fortwährend mit einer Quelle (22) für Druckmedium verbunden ist.

3. Produktstabilisator (14) nach Anspruch 1 oder 2, wobei die Naben (19, 20) mit dem biegsamen Material (21) abschließen und als Wände des im wesentlichen zylindrischen Balgs (21) dienen.

4. Produktstabilisator (14) nach einem oder mehreren der Ansprüche 1 - 3, wobei der Produktstabilisator (14) zur Verwendung in einem Produktüberwachungssystem vorgesehen ist und zur Stabilisierung der Produkte (12) zur Überwachung auf dem Förderband (10) dient.

5. Produktstabilisator (14) nach einem odere mehreren der vorhergehenden Ansprüche, wobei die Produkte (12, 11) Eßwaren sind.

6. Produktstabilisator (14) nach einem oder mehreren der vorhergehenden Ansprüche, wobei das Druckmedium ein Gas ist.

7. Produktstabilisator (14) nach einem oder mehreren der vorhergehenden Ansprüche, wobei der Balg (21) aus einem gummiartigen Material mit einem Härtegrad (Durometer-Härte) im Bereich von im wesentlichen 5.1 - 5.8 N (60 - 70) besteht.

8. Produktstabilisator (14) nach einem oder mehreren der vorhergehenden Ansprüche, wobei die rotierenden Naben (19, 20) im wesentlichen denselben Umfang wie der Balg (21) aufweisen.

9. Produktstabilisator (14) nach einem oder mehreren der vorhergehenden Ansprüche, der außerdem folgendes enthält:
- eine Achse (28), an der die Radnaben (19, 20) drehend oberhalb des Förderbandes (10) angeordnet sind, und
- eine Stützvorrichtung (29), um die Achse (28) zu tragen und eine freie nach oben gerichtete Bewegung (31) der Achse (28) zu ermöglichen, so daß übergroße Produkte (12) unter dem Stabilisator (14) passieren können.

10. Verfahren zum Stabilisieren von Produkten (12), die auf einem Förderband (10) transportiert werden, das folgende Schritte enthält:
- Aufblasen eines Balgs (21), der aus biegsamen Material (21) besteht, mit einem Druckmedium, um einen Balg (21) mit im wesentlichen zylindrischer Form zu schaffen, wobei der aufgeblasene Balg (21) zwischen einem Paar von Naben (19, 20) rittlings und in treibender Verbindung durch Kontakt mit dem Förderband (10) angeordnet ist,
- Ablage von Produkten (12) auf das Förderband (10), und
- Transport der Produkte (12) auf dem Förderband, um sie zwischen dem Balg (21) und dem Förderband (10) passieren zu lassen, so daß sich der Balg (21) im wesentlichen den Produkten (12) anpaßt und sie auf dem Förderband (10) stabilisiert.

11. Verfahren nach Anspruch 10, wobei die Naben (19, 20) im wesentlichen denselben Umfang wie der Balg (21) aufweisen, mit dem biegsamen Material (21) des Balgs (21) abschließen und als Wände des Balgs (21) dienen, so daß er im wesentlichen luftdicht abgeschlossen ist.

12. Verfahren nach Anspruch 10 oder 11, wobei der Balg (21) fortwährend mit einer Quelle (22) für Druckmedium verbunden ist.

13. Verfahren nach einem oder mehreren der Ansprüche 10 - 12, wobei das Hochdruckmedium Gas ist, die Produkte (12) Eßwaren sind und der Produkstabilisator zur Verwendung in einem Produktüberwachungssystem vorgesehen ist und zur Stabilisierung der Produkte (12) dient, um sie auf einem Förderband zu überwachen.

14. Produktüberwachungssystem, das einen Produktstabilisator (14) zur Stabilisierung von Produkten (12) für deren Überwachung aufweist, das folgende Teile enthält:
- eine optische Überwachungsvorrichtung (16);
- eine Fördervorrichtung (10) zum Transport von Produkten (12) über einen Weg entlang der optischen Überwachungsvorrichtung (16),
- ein Paar rotierende Naben (19, 20), die rittlings und in treibender Verbindung durch Kontakt mit der Fördervorrichtung (10) angeordnet sind, und
- einen aufblasbaren Balg (21), der aus biegsamem Material (21) besteht und zwischen den Naben (19, 20) angeordnet ist, wobei der Balg (21) so angeordnet ist, daß er ein Druckmedium aufnehmen kann und zu einer im wesentlichen zylindrischen Form aufblasbar ist, die dem Balg (21) ermöglicht, sich elastisch an Produkte (12) anzupassen, die zwischen ihm und der Fördervorrichtung (10) vorbeilaufen.

15. Produktüberwachungssystem nach Anspruch 14, wobei die Naben (19, 20) im wesentlichen denselben Umfang wie der Balg (21) aufweisen, mit dem biegsamen Material (21) des Balgs (21) abschließen und als Wände des Balgs (21) dienen, so daß er im wesentlichen luftdicht abgeschlossen ist.

16. Produktüberwachungssystem nach Anspruch 14 oder 15, wobei der Balg (21) fortwährend mit einer Quelle (22) für Druckmedium verbunden ist.

17. Produktüberwachungssystem nach einem oder mehreren der Ansprüche 14 - 16, wobei das Druckmedium Gas ist, die Produkte (12) Eßwaren sind und der Produktstabilisator (14) zum Gebrauch in einem Produktüberwachungssystem angeordnet ist und zur Stabilisierung der Produkte (12) dient, um sie auf der Fördervorrichtung (10) zu überwachen.

## Revendications

1. Stabilisateur de produits (14) pour stabiliser des produits (12) transportés sur une bande mobile de convoyeur (10), comprenant :
une paire de moyeux (19, 20) mobiles en rotation disposés à califourchon, et en prise pour entraînement par contact, sur la bande de convoyeur (10) ; et
une vessie gonflable (21) faite d'un matériau souple (21), et placée entre les moyeux en les reliant, la vessie (21) étant conçue pour recevoir un fluide sous pression et étant gonflable à une forme globalement cylindrique, qui permet à la vessie (21) de se conformer de manière élastique aux produits (12) passant entre elle et la bande de convoyeur (10).

2. Stabilisateur de produits (14) selon la revendication 1, dans lequel la vessie (21) est raccordée en permanence à une source (22) de fluide sous pression.

3. Stabilisateur de produits (14) tel que revendiqué dans la revendication 1 ou la revendication 2, dans lequel les moyeux (19, 20) sont fixés de manière étanche au matériau souple (21) et servent de parois à la vessie (21) de forme globalement cylindrique.

4. Stabilisateur de produits (14) tel que revendiqué dans l'une quelconque des revendications 1 à 3, dans lequel le stabilisateur de produits (14) est conçu pour utilisation dans un système d'inspection de produits et sert à stabiliser les produits (12), pour inspection, sur la bande de convoyeur (10).

5. Stabilisateur de produits (14) tel que revendiqué dans l'une quelconque des revendications 1 à 4, dans lequel les produits (12, 11) sont des produits alimentaires.

6. Stabilisateur de produits (14) tel que revendiqué dans l'une quelconque des revendications 1 à 5, dans lequel le fluide sous pression est constitué par un gaz.

7. Stabilisateur de produits (14) tel que revendiqué dans l'une quelconque des revendications 1 à 6, dans lequel la vessie (21) est formée d'un matériau du type caoutchouc ayant une durométrie située dans une plage allant sensiblement de 5,1 à 5,8 N (60 à 70).

8. Stabilisateur de produits (14) tel que revendiqué dans l'une quelconque des revendications 1 à 7, dans lequel les moyeux (19, 20) mobiles en rotation ont sensiblement la même longueur de circonférence que la vessie (21).

9. Stabilisateur de produits (14) tel que revendiqué dans l'une quelconque des revendications 1 à 8, comprenant en outre :
un axe (28) sur lequel les moyeux (19, 20) sont montés pour rotation au-dessus de la bande de convoyeur (10) ; et,
un moyen formant support (29) pour supporter l'axe (28) et permettant un libre déplacement vers le haut (31) de l'axe (28) de telle manière que des produits surdimensionnés (12) puissent passer sous le stabilisateur (14).

10. Procédé de stabilisation de produits (12) transportés sur une bande mobile de convoyeur (10), comprenant :
le gonflage, au moyen d'un fluide sous pression, d'une vessie (21) faite d'un matériau souple (21) pour créer une vessie (21) d'une forme sensiblement cylindrique, la vessie gonflée (21) étant située entre, et reliant, une paire de moyeux (19, 20) placés à califourchon, et en prise d'entraînement, par contact, sur la bande de convoyeur (10) ;
le dépôt de produits (12) sur la bande de convoyeur (10) ; et,
le transport des produits (12) sur la bande de convoyeur pour les faire passer entre la vessie (21) et la bande de convoyeur (10) de telle manière que la vessie (21) se conforme sensiblement aux produits (12) et les stabilise sur la bande de convoyeur (10).

11. Procédé selon la revendication 10, dans lequel les moyeux (19, 20) ont sensiblement la même longueur de circonférence que la vessie (21), sont fixés de manière étanche au matériau souple (21) de la vessie (21), et servent de parois à la vessie (21) de sorte qu'elle est sensiblement étanche à l'air.

12. Procédé tel que revendiqué dans la revendication 10 ou la revendication 11, dans lequel la vessie (21) est raccordée, en permanence, à une source de fluide sous pression (22).

13. Procédé tel que revendiqué dans l'une quelconque des revendications 10 à 12, dans lequel le fluide sous pression est constitué par un gaz, les produits (12) sont des produits alimentaires, et le stabilisateur de produits (14) est conçu pour utilisation dans un système d'inspection de produits, et sert à stabiliser les produits (12) pour examen sur la bande de convoyeur (10).

14. Système d'inspection de produits comportant un stabilisateur de produits (14) pour stabiliser des produits (12) pour inspection comprenant :
un dispositif d'inspection optique(16) ; un moyen convoyeur (10) pour convoyer des produits (12) le long d'un trajet passant devant le dispositif d'inspection optique (16) ;
une paire de moyeux (19, 20) mobiles en rotation disposés à califourchon, et en prise pour entraînement par contact, sur la bande de convoyeur (10) ; et
une vessie gonflable (21) faite d'un matériau souple (21), et placée entre les moyeux (19, 20) en les reliant, la vessie (21) étant conçue pour recevoir un fluide sous pression et étant gonflable à une forme globalement cylindrique, qui permet à la vessie (21) de se conformer de manière élastique aux produits (12) passant entre elle et la bande de convoyeur (10).

15. Système d'inspection de produits selon la revendication (14), dans lequel les moyeux (19, 20) ont sensiblement la même longueur de circonférence que la vessie (21), sont fixés de manière étanche au matériau souple (21) de la vessie (21), et servent de parois à la vessie (21) de sorte qu'elle est sensiblement étanche à l'air.

16. Système d'inspection de produits tel que revendiqué dans la revendication 14 ou la revendication 15, dans lequel la vessie (21) est raccordée, en permanence, à une source (22) de fluide sous pression.

17. Système d'inspection de produits tel que revendiqué dans l'une quelconque des revendications 14 à 16, dans lequel le fluide sous pression est constitué par un gaz, les produits (12) sont des produits alimentaires, et le stabilisateur de produits (14) est conçu pour utilisation dans un système d'inspection de produits, et sert à stabiliser les produits (12) pour inspection sur le moyen convoyeur (10).
